Europäisches Patentamt

European Patent Office

Office européen des brevets

(11) Veröffentlichungsnummer: **0 243 525**
**A1**

## (12) EUROPÄISCHE PATENTANMELDUNG

(21) Anmeldenummer: **86105995.4**

(22) Anmeldetag: **30.04.86**

(51) Int. Cl.⁴: **B23B 31/16**

(43) Veröffentlichungstag der Anmeldung:
**04.11.87 Patentblatt 87/45**

(84) Benannte Vertragsstaaten:
**DE FR GB IT**

(71) Anmelder: **Wilhelm Hegenscheidt
Gesellschaft mbH
Neusser Strasse 3
D-5140 Erkelenz(DE)**

(72) Erfinder: **Boms, Manfred
Dorper Strasse 23
D-5144 Wegberg(DE)**

(74) Vertreter: **Liermann, Manfred
Josef-Schregel-Strasse 19
D-5160 Düren(DE)**

(54) **Kraftspannfutter mit schnell wechselbaren Spannbacken.**

(57) Bei der Erfindung geht es um ein Spannfutter mit radial im Futterkörper beweglichen Backen (1), die ihrerseits je eine an diesen Backen radial bewegliche weitere Backe (2) tragen, die mittels eines Arretierstückes (4) in mindestens einer Radialposition relativ zu den beweglichen Backen (1) arretierbar ist. Bei solchen Futtern wird vorgeschlagen, daß jede der weiteren Backen (2) eine Öffnung (3) auf der Unterseite aufweist, in welche ein bewegliches Arretierstück (4) mindestens teilweise einbringbar ist, das mit der beweglichen Backe (1) mindestens formschlüssig verbunden ist.

Fig 1

## Kraftspannfutter mit schnell wechselbaren Spannbacken

Die Erfindung betrifft ein Spannfutter mit radial im Führungskörper beweglichen Backen, die ihrerseits je eine an diesen Backen radial bewegliche weitere Backe tragen, die mittels eines Arretierstückes in mindestens einer Radialpositon relativ zu den ersten Backen arretierbar ist.

Spannfutter der vorgenannten Art sind bereits bekannt geworden durch die DE-PS 26 32 938. Spannfutter dieser Art haben sich in der Technik bestens bewährt. Die Arretierung der Spannbacken, die in direktem Kontakt mit dem Werkstück kommen, läßt jedoch einen schnellen, präzisen und einfachen Wechsel dieser Spannbacken nicht zu. Die Konstruktion ist darüber hinaus so, daß eine Automatisierung des Spannbackenwechsels mit einem wirtschaftlich nicht mehr vertretebaren Aufwand verbunden wäre.

Ausgehend von diesem Stand der Technik liegt der Erfindung die Aufgabe zugrunde ein Kraftspannfutter der eingangs beschriebene Art vorzuschlagen, bei dem der Spannbackenwechsel sehr rasch und einfach durchführbar ist, wobei auch eine Automatisierung des Spannbackenwechsels einfach erreichbar ist.

Erfindungsgemäß ist diese Aufgabe dadurch gelöst, daß mit der einen Backe ein bewegliches Arretierstück mindestens formschlüssig verbunden ist, welches mindestens teilweise in einen Öffnung der anderen Backe einbringbar ist und hierdurch einen Formschluß zwischen beiden Backen herstellt.

Eine Ausgestaltung der Erfindung sieht vor, daß jede der weiteren Backen mindestens eine Öffnung auf der Unterseite aufweist, wobei in eine Öffnung ein bewegliches Arretierstück mindestens teilweise einbringbar ist, das mit der beweglichen Backe mindestens formschlüssig verbunden ist. Ein einzelnes Arretierstück, das mit der im Futtergrundkörper radial bewegliche geführten Grundbacke formschlüssig verbunden und in eine Öffnung der weiteren Backe, also der Spannbacke einbringbar ist, sorgt für eine einfache formschlüssige Verbindung zwischen diesen beiden Backen. Die hierzu notwendigen Mittel sind einerseits einfach in der Gestaltung und andereseits einfach in der Handhabung.

Nach einer Ausgestaltung der Erfindung ist vorgesehen, daß jedes Arretierstück in der zugeordneten Backe um eine zur Futterachse radial verlaufende Achse drehbar gelagert und an einem Umfangsbereich einen Abflachung aufweist. Hierdurch wird es möglich die gewünschte Verriegelung durch eine Drehbewegung des Arretierstücks durchzuführen. Eine Drehbewegung ist sowohl manuell als auch über eine automatische Wechseleinrichtung einfach erreichbar. Über die Abflachung des Arretierstückes wird eine Lösestellung dadurch erreicht, daß die Abflachung in eine für die Spannbackenentnahme geeignete Positon gedreht und in diese Position durch einen Kupplungsvorsprung arretiert wird. In dieser Position kann sowohl die bisherige Spannbacke entnommen als auch eine neue Spannbacke eingesetzt werden. Eine neuerliche Drehbewegung des Arretierstücks bewirkt dann die gewünschte Arretierung.

Wiederum eine Ausgestaltung der Erfindung sieht vor, daß jedes Arretierstück drehfest auf einem in der beweglichen Backe mit einer radial zur Futterachse gerichteten Achse drehbar gelagerten Bolzen angeordnet ist. Dies ist eine besonders einfache konstruktive Ausführung, die mit elementarsten Mitteln eine sichere Arretierung einerseits und eine außerordentlich einfache Montage und Demontage der Einzelteile andererseits erlaubt.

In einer ergänzenden Ausgestaltung nach der Erfindung wird vorgeschlagen, daß der Bolzen in axialer Richtung unter der Vorlast eines elastischen Elementes steht und über lösbare formschlüssige Mittel gegen Axialverschiebung in Wirkrichtung der Vorlast gesichert ist. Auf diese Art und Weise wird einerseits unerwünschtes Spiel beseitigt und eine eindeutige Anlagesituation erreicht und andererseits die Entnahme des Bolzens sehr vereinfacht. Es ist lediglich erforderlich, daß die formschlüssigen Mittel gelöst werden, so daß der Bolzen von den elastischen Elementen in axialer Richtung aus dem Futtergrundkörper herausgedrückt wird, mindestens soweit, daß er danach leicht entnommen werden kann.

Es ist weiter nach der Erfindung vorgesehen, daß jedes Arretierstück zwei planparallele Flächen aufweist und je in Arretierstellung an entsprechend parallelen Flächen sowohl der beweglichen Backe als auch der weiteren Backe anliegt. Auf diese Art und Weise wird das Arretierstück außerordentlich leicht herstellbar. Dies gilt ebenso für die Herstellung der entsprechenden Gegenflächen an den Grundbacken und den Spannbacken. Darüber hinaus wird über die Anlage dieser Flächen eine günstige Krafteinleitung in die jeweils zugeordneten Körper erreicht.

Es ist weiterhin nach der Erfindung vorgeschlagen, daß die parallelen Flächen Flächen einer Öffnung einerseits in der beweglichen Backe und andererseits in der weiteren Backe sind. Hierdurch wird über das Arretierstück ein direkter und starrer Formschluß zwischen den Backen erreicht.

Wiederum eine Ausgestaltung der Erfindung sieht vor, daß jede der weiteren Backen mindestens über den wesentlichen Bereich ihrer Länge mit einem im Querschnitt profilierten Führungsfuß ausgerüstet ist, der in eine entsprechende Führung einer der beweglichen Backen eingreifen kann. Hierdurch gelingt es sehr einfach in Lösestellung über diese Führungen die jeweils als Spannbacke benutzte Backe einfache die in Arretierposition zu verschieben und zu arretieren. Irgendwelche Befestigungsverschraubungen sind nicht erforderlich.

In ergänzender Ausgestaltung wird nach der Erfindung vorgeschlagen, daß der Führungsfuß im Querschnitt T-förmig ausgebildet und die Führung in der beweglichen Backe als T-Nut gestaltet ist. Dieses Querschnittsprofil ist besonders einfach herzustellen, ergibt eine leichtgängige Führung und ist in der Lage senkrecht zur Bewegungsrichtung, die von der Führung vorgeschrieben ist, große Kräfte zu übertragen.

Wiederum eine andere Ausgestaltung der Erfindung sieht vor, daß jede der weiteren Backen in Arretierposition an einem Anschlag anliegt. Auf diese Art und Weise ist die Arretierposition besonders einfach erreichbar. Irgendwelche Messungen oder Schätzungen sind nicht erforderlich. Ebenso kann auf Zwangsführungen zur Einfädelung des Arretierstücks verzichtet werden und damit alle Bauelemente einfach gestaltet werden.

In ergänzender Ausgestaltung wird nach der Erfindung vorgeschlagen, daß die radial innenliegende Stirnfläche jeder der weiteren Backen mindestens in Teilen des Bereiches des Führungsfußes als Anschlagfläche dient, die mit einem Anschlag zusammenarbeitet. Hierdurch kann auf die Gestaltung einer besonderen Anschlagfläche verzichtet werden, denn sie ist als Grenzfläche der jeweiligen Spannbacke bereits vorhanden. Es ist lediglich im Bereich des Futterkörpers eine entsprechende Gegenfläche vorzusehen.

Ergänzend ist nach der Erfindung vorgeschlagen, daß je eine Anschlagfläche an der beweglichen Backe geformt ist. Dies ist besonders günstig, weil ja während der Spannbewegung bewegliche Backe und daran angeordnete weitere Backe gemeinsam bewegt werden.

Ausgestaltend wird nach der Erfindung vorgeschlagen, daß zwischen Anschlagfläche einer beweglichen Backe und Anschlagfläche der weiteren Backen je ein Zwischenstück vorgesehen ist. Das Zwischenstück kann hierbei als Paßstück und Verschleißstück dienen.

Es ist weiter nach der Erfindung vorgeschlagen, daß die Abflachung des Arretierstückes in Lösestellung um einen kleinen Betrag über eine untere Fläche der Führung in der beweglichen Backe übersteht, daß der vordere Teil des Führungsfußes jeder der weiteren Backen eine höherliegende untere Fläche aufweist, die oberhalb der Abflachung des Arretierstückes liegt und daß die radial außen liegende planparallele Fläche des Arretierstückes als Anschlagfläche für die entsprechende Gegenfläche der zugeordneten weiteren Backe dient. Auf diese Art und Weise gelingt es sogar die separate Ausbildung von Anschlagflächen an der beweglichen Grundbacke überflüssig zu machen. Die Flächen, die ohnehin der Gestaltung des Formschlusses und der Kraftübertragung dienen und damit ohnehin vorhanden sein müssen, dienen gleichzeitig als Anschlagfläche.

Auch ist nach der Erfindung noch vorgeschlagen, daß mindestens eine Öffnung wenigstens angenähert auf der Mitte der Länge der weiteren Backen vorgesehen ist. Dies ist eine für die zu übertragenden Kräfte günstige Position.

Schließlich ist nach der Erfindung noch vorgeschlagen, daß jedes Arretierstuuck in der zugeordneten Backe um eine zur Futterachse radial verlaufende Achse drehbar gelagert und als Exzenter oder Nocken ausgebildet ist. Auch diese Form des Arretierstückes stellt eine funktionsfähige, günstige und einfach herzustellende Gestaltung dar.

Die Erfindung soll nun anhand der Zeichnungen, die ein Ausführungsbeispiel zeigen, näher erläutert werden.

Es zeigen:

Figure 1 Ausschnittsweise Querschnitt durch ein erfindungsgemäßes Kraftspannfutter mit der erfindungsgemäßen Arretiereinrichtung

Figur 1a Variante nach Figur 1

Figur 2 Schnitt II-II nach Figur 1

Figur 2a Schnitt IIa - IIa nach Figur 1a

Figur 2b Variante zu Figur 2

Figur 3 Schnitt III-III nach Figur 1

Figur 4 Ansicht in Richtung des Pfeils A nach Figur 1

Figur 5 Ansicht in Richtung des Pfeils B nach Figur 1

Eine nicht näher dargestellte, in bekannter Weise als Kraftspannfutter ausgebildete Planscheibe 24 einer ebenfalls nicht dargestellten Senkrechtdrehmaschine ist um die Futterachse 6 in an sich bekannter Weise drehangetrieben. Ein solches als Planscheibe ausgebildetes Kraftspannfutter weist in ebenfalls an sich bekannter Weise radial beweglich geführte Backen 1 als Grundbacken auf. Diese Backen 1 sind in bekannter Weise mit den Kraftbetätigungsmitteln verbunden und werden von diesen radial einwärts oder auswärts gefahren. Die beweglichen Backen 1 weisen je eine Führung 18 mit T-förmigem Querschnitt auf. In diese Führung 18 ist mit einem entsprechend T-förmigen Führungsfuß 17 je eine weitere Backe 2 eingeschoben. Diese weitere Backe 2 wird soweit eingeschoben, bis sie mit einem Bereich ihrer vorderen, radial innen liegenden Stirnfläche 20 gegen einen Anschlag oder ein Zwischenstück 19 zur Anlage kommt, das sich seinerseits an einer Anschlagfläche 21 an der beweglichen Backe 1 abstützt.

Die bewegliche Backe 1 weist eine quer zur Backe gerichtete Öffnung 3' mit planparallel zueinander verlaufenden, ebenfalls quergerichteten Flächen 15 und 15' als Begrenzungsflächen auf. In der beschriebenen Anordnung, in der die weitere Backe 2 am Anschlag 19 anliegt, befindet sich eine weitere Öffnung 3 in Position oberhalb de Öffnung 3'. Diese weitere Öffnung 3 befindet sich etwa auf der Hälfte der Länge 16 der weiteren Backe 2 und weist ebenfalls quergerichtete, planparallel zueinander verlaufende Flächen 14 und 14' als Begrenzung auf. Die Flächen 14 und 14' weisen zueinander den gleichen Abstand auf wie die Flächen 15 und 15'. Es können sich bei Bedarf auch mehrere Öffnungen 3 in unterschiedlichen Positionen in der weiteren Backe 2 befinden.

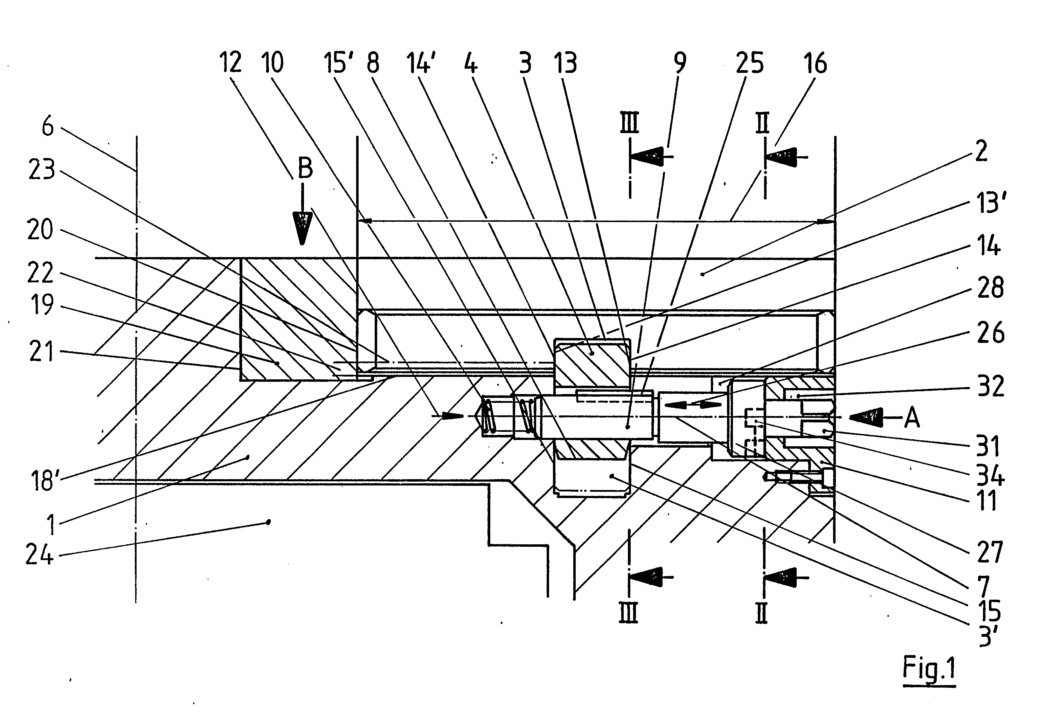

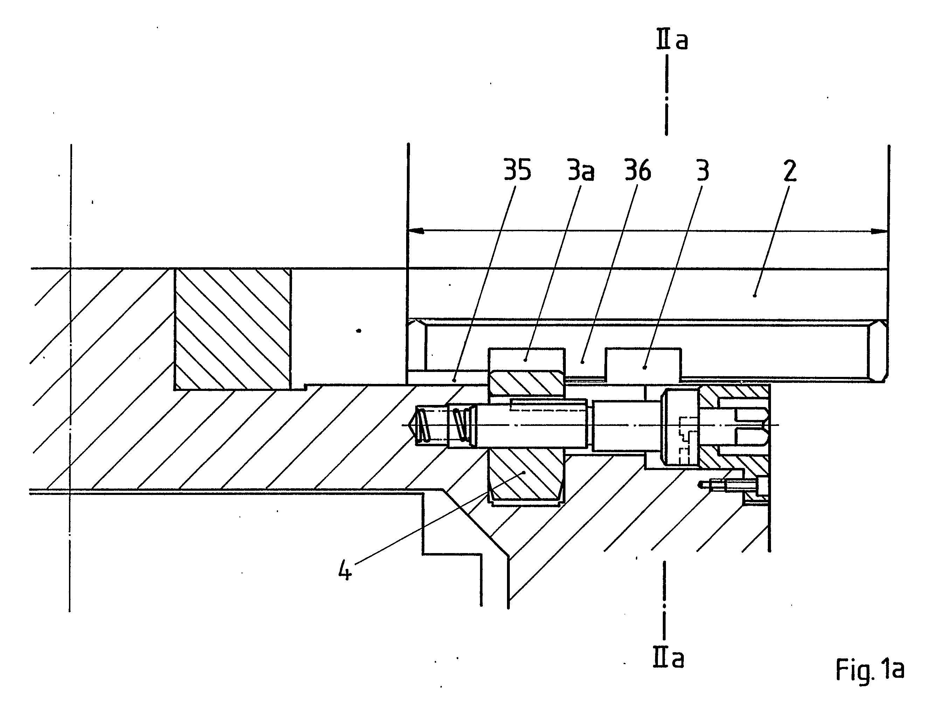

Senkrecht zu den Flächen 15 und 15' verlaufend, weist jede bewegliche Backe 1 eine nicht näher bezeichnete Bohrung auf, in welcher ein Bolzen 9 um seine Achse 7 drehbar gelagert ist. Der Bolzen 9 durchdringt beide Flächen 15 und 15' und ist an seiner radial nach innen gerichteten Stirnseite von einem elastischen Element 10, vorzugsweise einer Spiraldruckfeder, in Richtung des Pfeils 12, also radial nach außen, vorbelastet. Im Ausführungsbeispiel nach Figur 1 und der dort gezeigten Lage der Bauteile zueinander ist innerhalb der übereinanderstehenden Öffnungen 3 und 3' ein als runde Scheibe ausgebildetes Arretierstück 4 angeordnet, das auf dem Bolzen 9 axial lose aber drehfest gelagert ist. Die Drehmitnahme kann hierbei beispielsweise in üblicher Weise über eine Nut-Paßfederverbindung erfolgen.

Das Arretierstück ist eine flache, kreisrunde Scheibe, die in einem bestimmten Bereich des Umfangs eine Abflachung 8 aufweist. In der dargestellten Lage ist die Backe 2 mit der Backe 1 über das Arretierstück 4 starr verriegelt, weil die planparallelen Flächen 13 und 13' des Arretierstücks 4 sowohl an den entsprechenden Flächen 14 und 14' der Backen 2 als auch an den entsprechenden Flächen 15 und 15' der Backen 1 anliegen. Backe 1 und Backe 2 kann in dieser Position nicht relativ gegeneinander verschoben werden. Die Paßfeder 25 verbindet das Arretierstück 4 drehfest mit dem Bolzen 9. Ein Kupplungsvorsprung 34 an der Flanschbüchse 11 greift in eine Öffnung des Bolzenkopfes 27 ein und verhindert eine unbeabsichtigte Drehung des Arretierstückes 4. Es kann dies eine vorteilhafte Gestaltung besonders dann sein, wenn eine automatische Wechslung vorgenommen werden soll. In der gezeichneten Ausführung nach Figur 1 ist der Bolzen 9 in Richtung des Pfeils 26 begrenzt beweglich. Die Beweglichkeit wird begrenzt durch einen Bolzenkopf 27, der einen größeren Durchmesser als der Bolzen selbst hat und in einer entsprechend großen Öffnung 28 der beweglichen Backe 1 eintaucht. Radial einwärts - schlägt dann der Bolzenkopf 27 mit seiner entsprechenden Stirnfläche auf dem Grund der Öffnung 28 an und radial auswärts liegt die entsprechende Stirnfläche des Bolzenkopfs 27 aufgrund der Vorlast des elastischen Elementes 10 an der inneren Planfläche einer Flanschbüchse 11 an, die damit als lösbare formschlüssige Mittel den Bolzen 9 halten.

Der Bolzenkopf 28 weist koaxial zu seiner Achse 7 ein Drehstück 31 auf (Figur 1). Drehstück 31 ist drehbar geführt in einer zur Achse 7 konzentrischen Bohrung der Flanschbüchse 11. Die Flanschbüchse 11 weist hierbei einen erweiterten Bohrungsbereich 32 auf, der das Drehstück 31 umfaßt. Hierbei ist die Flanschbüchse 11 vollständig in die Öffnung 28 der beweglichen Backe 1 eingesetzt, so daß keinerlei Bauteile radial überstehen.

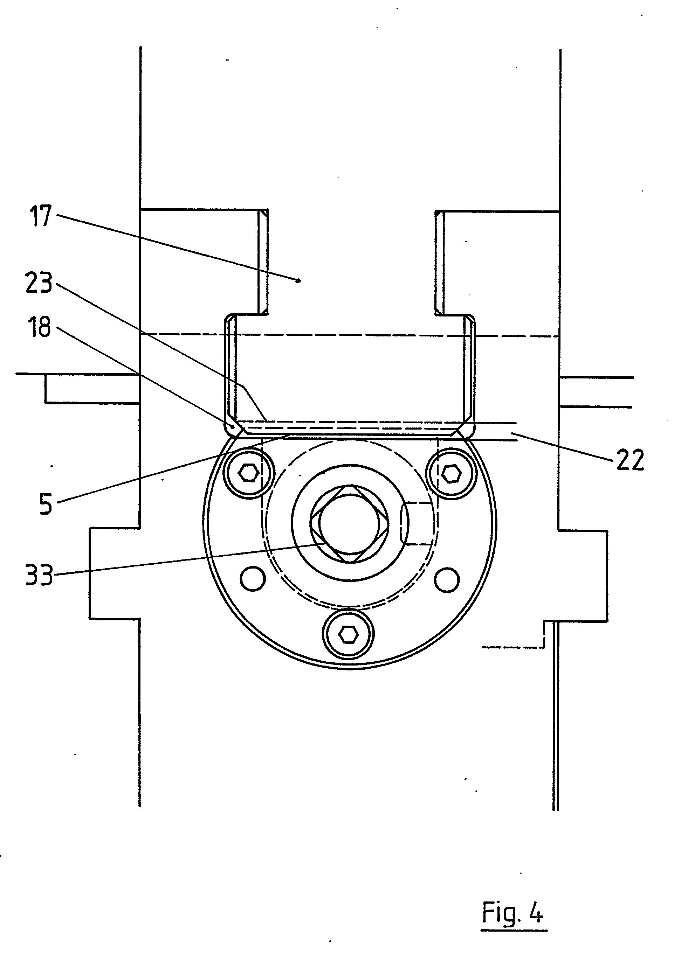

Das Drehstück 31 weist in seinem radial nach außen gerichteten Endbereich einen Vierkant 33 auf (Figur 4), auf den ein entsprechender Schlüssel aufgesetzt werden kann zur Durchführung einer Drehung des Bolzens 9 und damit des Arretierstücks 4.

Um die Backe 2 entnehmen zu können, wird in der beschriebene Weise der Bolzen 2 und damit das Arretierstück 4 gedreht solange, bis die Abflachung 8 parallel liegt zur unteren Fläche 18' der Führung 18. Sie kann hierbei in der gleichen Ebene dieser unteren Fläche 18' oder darunter liegen. In dieser Drehstellung ist die Backe 2 nicht mehr über das Arretierstück 4 formschlüssig mit der Backe 1 verbunden und kann radial auswärts aus der Führung 18 herausgezogen werden. Eine neue Backe 2 kann dann in die Führung eingesetzt und radial einwärts geschoben werden, bis die Stirnfläche 20 an einer Anschlagfläche 21 oder am Anschlag 19 zur Anlage kommt. Es ist aber auch möglich auf diese Anschläge zu verzichten und beispielsweise die Fläche 14 als Anschlagfläche der Backe 2 und die Fläche 13 des Arretierstücks 4 als entsprechende Gegenfläche zu benutzten. Hierzu ist lediglich erforderlich, daß die Abflachung 8 nicht in oder unterhalb der unteren Fläche 18' der Führung 18 liegt, sondern etwas darüber. Um einem entsprechend kleinen Betrag 22 ist dann die untere Fläche 23 des Führungsfußes 17 angehoben, so daß diese untere Fläche 23 über die Abflachung 8 hinweg gleiten kann. Der der Öffnung 3 sich anschließende Bereich der Führungsfußes 17 weist wieder eine normal tief liegende untere Fläche auf, so daß dieser Bereich nicht mehr über die Abflachung 8 hinweggeschoben werden kann. Es kommt auf diese Art und Weise vielmehr die Planfläche 14 an der Planfläche 13 des Arretierstücks zur Anlage, so daß das Arretierstück 4 selbst als Anschlag beim Einschub einer weiteren Backe 2 wirkt.

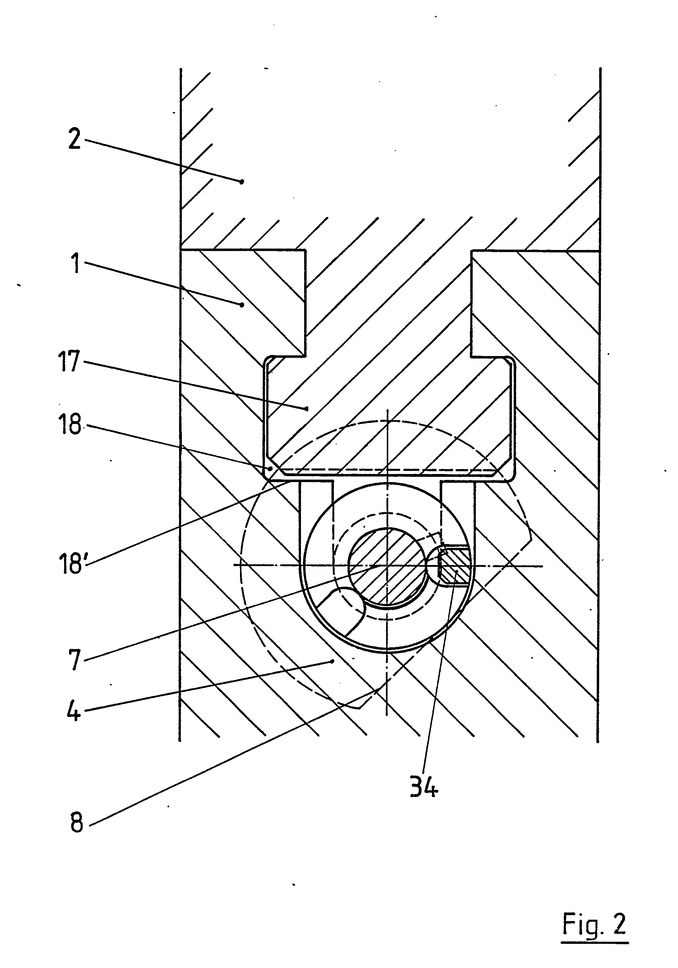

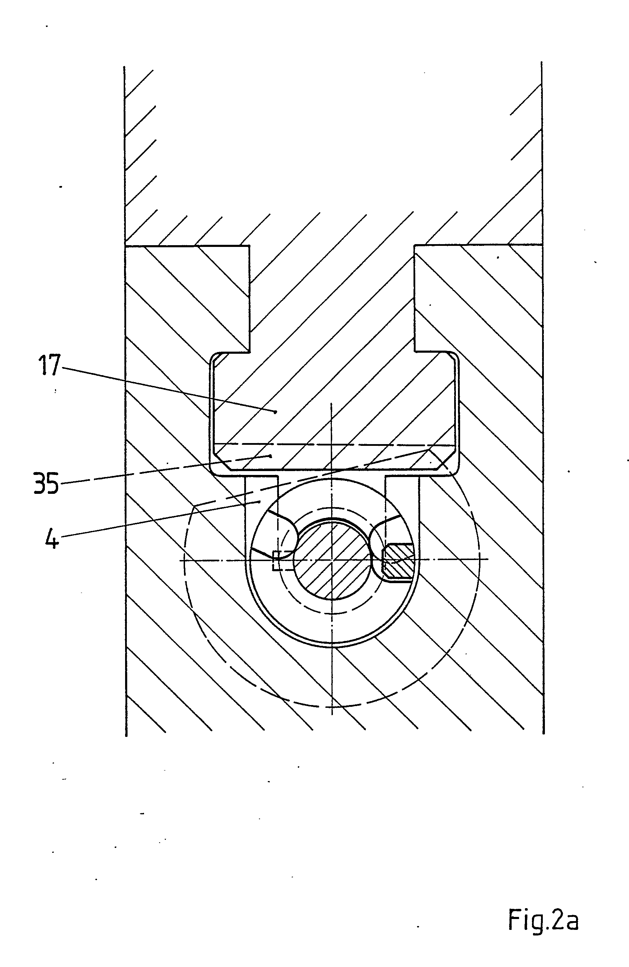

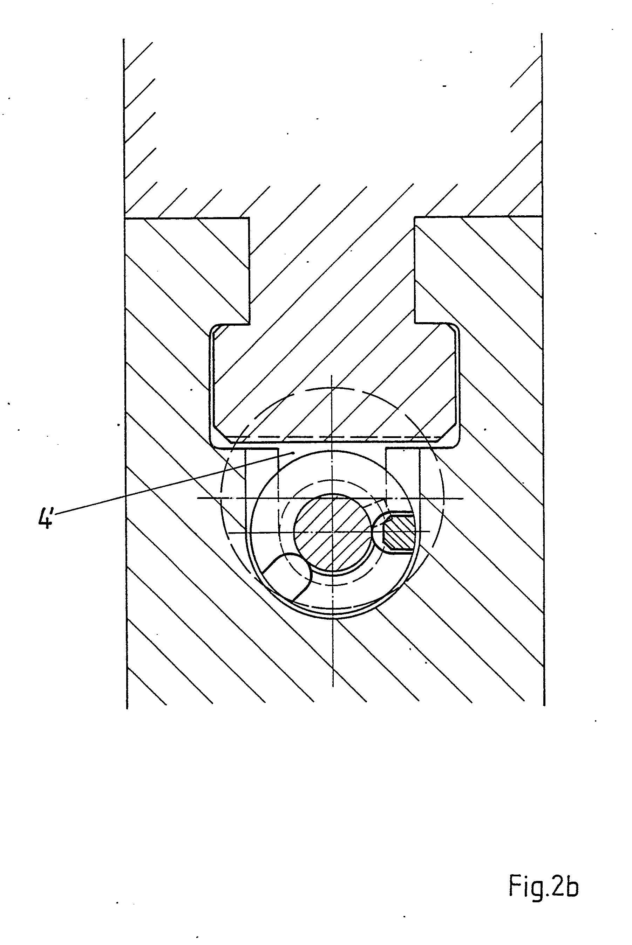

Wenn die weitere Backe 2 z.B. zusätzlich zu der Öffnung 3 eine weitere Öffnung 3a aufweist (s.Figur 1a) kann ganz ähnlich verfahren werden. Der Führungsfuß 17 weist dann lediglich in dem Bereich zwischen radial innenliegendem Ende und der Öffnung 3a eine Anhebung 35 auf, die etwas größer ist als der bisher beschriebene Betrag 22. Das Arretierstück kann dann, wie in Figur 2a gezeigt, leicht schräg gestellt werden, so daß der Bereich mit der Anhebung 35 darübergleitet. Das nicht so weit angehobene Zwischenstück - dieses ist nur um den Betrag 22 angehoben -wirkt dann wieder als Anschlag, mit dem Öffnung 3a und Arretierstück 4 relativ zueinander positioniert werden können.

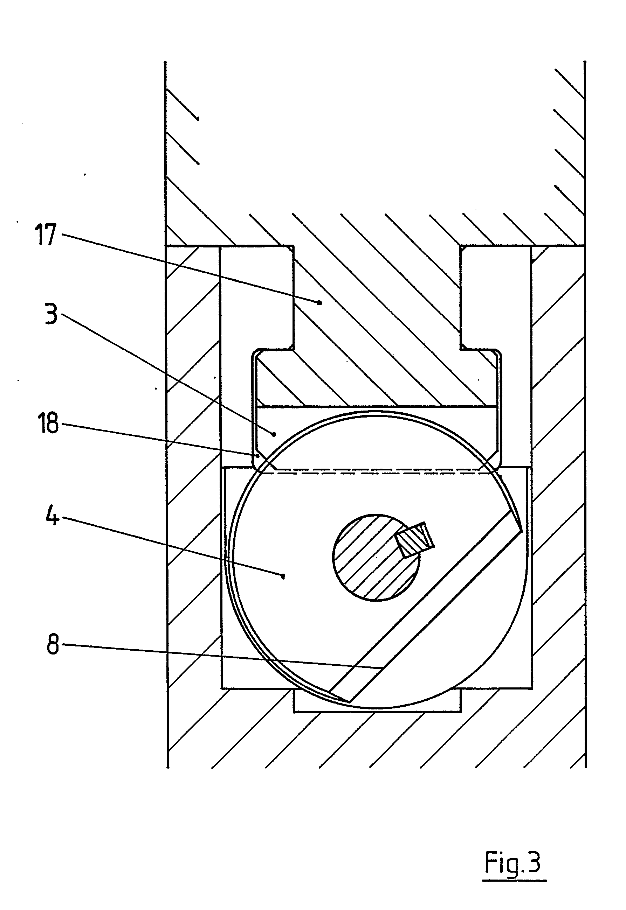

Ist nun eine Backe 2 bis auf Anschlag eingeschoben, so kann sie in dieser Position durch Drehung des Arretierstücks 4 bis in die Arretierposition arretiert werden. Die Figuren 1 bis 3 zeigen die Arretierposition.

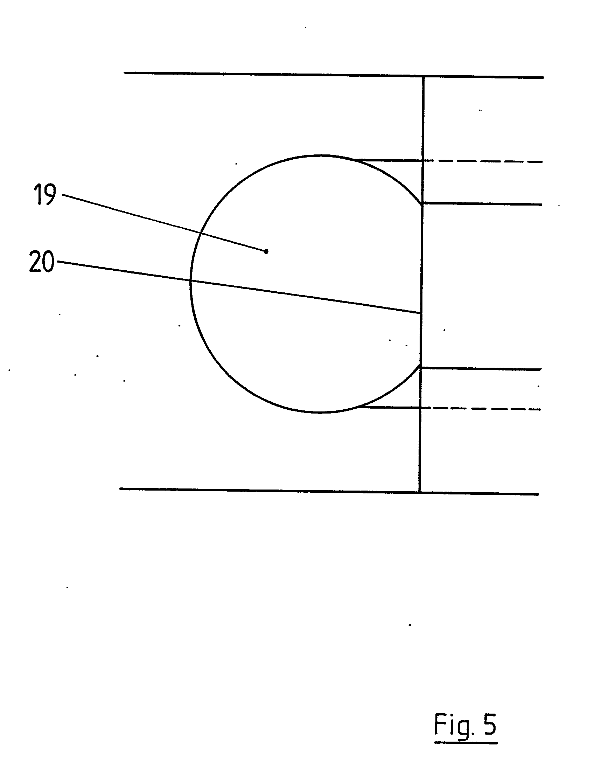

Wird nicht gewünscht, daß das Arretierstück 4 gleichzeitig .als Anschlag dient, so kann beispielsweise ein Anschlag 19 vorgesehen sein. Hierzu kann am Ende der Führung 18 in der Backe 1 eine Sackbohrung mit einer Achse parallel zur Futterachse 6 vorgesehen sein, die mindestens bis auf den Grund der Führung 18 reicht. In diese Sackbohrung wird dann ein Anschlagstück 19 in Form einer zylindrischen Scheibe eingesetzt. Diese zylindrische Scheibe weist an ihrem Umfang ebenfalls eine nicht näher bezeichnete, in Figur 5 jedoch gut zu erkennende Abflachung auf, die als Gegenfläche für die Strinfläche 20 der Backe 2 dient. Da sich das Stück 19 in der zugeordneten Sackbohrung drehen kann, ist immer gewährleistet, daß die Abflachung des Anschlags 19 vollständig an der Stirnfläche 20 anliegt. Parallelitätsfehler dieser beiden Flächen werden durch entsprechende Drehung des Anschlags 19 in der zugeordneten Sackbohrung ausgeglichen. Diese Form des Anschlags ist daher einfacher und funktionssicherer herzustellen als würde eine Anschlagfläche 21 direkt und starr an der Backe 1 selbst angeformt werden.

Liste der verwendeten Bezugszeichen

   1 bewegliche Backen
   2 weitere Backen
   3 Öffnung
   3a Öffnung
   3' Öffnung
   4 Arretierstück
   4' Arretierstück
   5 unbenutzt
   6 Futterachse
   7 Achse
   8 Abflachung
   9 Bolzen
   10 elastisches Element
   11 lösbare formschlüssige Mittel (Flanschbuchse)
   12 Wirkrichtung der Vorlast
   13 planparallele Fläche
   13' planparallele Fläche
   14 parallele Fläche
   14' parallele Fläche
   15 parallele Fläche
   15' parallele Fläche
   16 Länge der weiteren Backe
   17 Führungsfuß
   18 Führung
   18' untere Fläche der Führung
   19 Anschlag
   20 Stirnfläche
   21 Anschlagfläche an beweglicher Backe
   22 kleiner Betrag
   23 höher liegende untere Fläche
   24 Planscheibe (als Kraftspannfutter)
   25 Paßfeder
   26 Pfeil
   27 Bolzenkopf
   28 Öffnung
   29 Flanschbüchse
   30 unbenutzt
   31 Drehstück
   32 erweiterter Bereich
   33 Vierkant
   34 Kupplungsvorsprung
   35 Anhebung
   36 Zwischenstück

## Ansprüche

1. Spannfutter mit radial im Futterkörper beweglichen Backen, die ihrerseits je eine an diesen Backen radial bewegliche weitere Backe tragen, die mittels eines Arretierstückes in mindestens einer Radialposition relativ zu den ersten Backen arretierbar ist, dadurch gekennzeichnet, daß mit der einen Backe (1) ein bewegliches Arretierstück mindestens formschlüssig verbunden ist, welches mindestens teilweise in eine Öffnung (3) der anderen Backe (2) einbringbar ist und hierdurch einen Formschluß zwischen beiden Backen (1,2) herstellt.

2. Spannfutter mindestens nach Anspruch 1 , dadurch gekennzeichnet, daß jede der weiteren Backen (2) mindestens eine Öffnung (3) auf der Unterseite (5) aufweist, wobei in eine Öffnung ein bewegliches Arretierstück (4) mindestens teilweise einbringbar ist, das mit der beweglichen Backe (1) mindestens formschlüssig verbunden ist.

3. Einrichtung mindestens nach Anspruch 1, dadurch gekennzeichnet, daß jedes Arretierstück (4) in der zugeordneten Backe (1) um eine zur Futterachse (6) radial verlaufende Achse (7) drehbar gelagert und an einem Umfangsbereich eine Abflachung (8) aufweist.

4. Einrichtung mindestens nach Anspruch 3, dadurch gekennzeichnet, daß jedes Arretierstück (4) drehfest auf einem in der beweglichen Backe (1) mit einer radial zur Futterachse gerichteten Achse (7) drehbar gelagerten Bolzen (9) angeordnet ist.

5. Einrichtung mindestens nach Anspruch 4, dadurch gekennzeichnet, daß der Bolzen (9) in axialer Richtung unter der Vorlast eines elastischen Elementes (10) steht und über lösbare formschlüssige Mittel (11) gegen Axialverschiebung in Wirkrichtung (12) der Vorlast gesichert ist.

6. Einrichtung nach mindestens einem der Ansprüche 1 bis 5, dadurch gekennzeichnet, daß jedes Arretierstück (4) zwei planparallele Flächen (13, 13') aufweist und je in Arretierstellung an entsprechend parallelen Flächen (14,14'; 15, 15') sowohl der beweglichen Backe (1) als auch der weiteren Backe (2) anliegt.

7. Einrichtung mindestens nach Anspruch 6, dadurch gekennzeichnet, daß die parallelen Flächen (14,14'; 15,15') Flächen einer Öffnung (3,3') einerseits in der beweglichen Backe (1) und andererseits in der weiteren Backe (2) sind.

8. Einrichtung nach mindestens einem der Ansprüche 1 bis 7, dadurch gekennzeichnet, daß jede weitere Backe (2) mindestens über den wesentlichen Bereich ihrer Länge (16) mit einem im Querschnitt profilierten Führungsfuß (17) ausgerüstet ist, der in eine entsprechende Führung (18) einer beweglichen Backe (1) eingreifen kann.

9. Einrichtung mindestens nach Anspruch 8, dadurch gekennzeichnet, daß der Führungsfuß (17) im Querschnitt T-förmig ausgebildet und die Führung (18) in der beweglichen Backe (1) als T-Nut gestaltet ist.

10. Einrichtung nach mindestens einem der Ansprüche 1 bis 9, dadurch gekennzeichnet, daß jede der weiteren Backen (2) in Arretierposition an einem Anschlag (19, 4) anliegt.

11. Einrichtung mindestens nach Anspruch 10, dadurch gekennzeichnet, daß die radial innen liegende Stirnfläche (20) jede der weiteren Backen (2) mindestens in Teilen des Bereichs des Führungsfußes (17) als Anschlagfläche dient, die mit einem Anschlag (19) zusammenarbeitet.

12. Einrichtung mindestens nach Anspruch 11, dadurch gekennzeichnet, daß je eine Anschlagfläche (21) an der beweglichen Backe (1) geformt ist.

13. Einrichtung mindestens nach Anspruch 12, dadurch gekennzeichnet, daß zwischen Anschlagfläche (21) einer beweglichen Backe (1) und Anschlagfläche (20) der weiteren Backe (2) je eine Zwischenstück (19) vorgesehen ist.

14. Einrichtung nach mindestens einem der Ansprüche 1 bis 13, dadurch gekennzeichnet, daß die Abflachung (8) des Arretierstücks (4) in Lösestellung (Figur 4) um einen kleinen Betrag (22) über eine untere Fläche (18') der Führung (18) in der beweglichen Backe (1) übersteht, daß der vordere Teil des Führungsfußes (17) jeder der weiteren Backen (2) eine höher liegende untere Fläche (23) aufweist, die oberhalb der Abflachung (8) des Arretierstückes (4) liegt und daß die radial außen liegende planparallele Fläche (13) des Arretierstücks (4) als Anschlagfläche für die entsprechende Gegenfläche (14) der zugeordneten weiteren Backe (2) dient.

15. Einrichtung nach mindestens einem der Ansprüche 1 bis 14, dadurch gekennzeichnet, daß mindestens eine Öffnung (3) wenigstens angenähert auf der Mitte der Länge (16) der weiteren Backen (2) vorgesehen ist.

16. Einrichtung mindestens nach Anspruch 1, dadurch gekennzeichnet, daß jedes Arretierstück (4') in der zugeordneten Backe (1) um eine zur Futterachse (6) radial verlaufender Achse (7) drehbar gelagert und als Exzenter oder Nocken ausgebildet ist.

0 243 525

Fig.1

35   3a   36   3   2

0 243 525

4

Fig. 1a

Fig. 2

0 243 525

Fig.2a

4'

Fig.2b

0 243 525

Fig.3

Fig. 4

19

20

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-2 104 904  (GILDEMEISTER) <br><br> * Spalte 3, Zeile 66 - Spalte 4, Zeile 53; Figuren 3-7 * | 1,2,10 -12 | B 23 B  31/16 |
| Y | DE-B-2 515 800 (EKSPERIMENTALNYI NAUTSCHNO-ISSLEDOVATELSKIJ INSTITUT) <br> * Anspruch 1; Spalten 3,4; Figuren 2,3 * | 1,2 | |
| A | | 8,16 | |
| Y | EP-A-0 038 269  (PRECISION INDUSTRIELLE) <br> * Ansprüche 1,2; Figuren 8,9 * | 1,2 | |
| A | | 16 | RECHERCHIERTE SACHGEBIETE (Int. Cl.4) <br><br> B 23 B  31/00 |
| Y | US-A-1 454 148  (BISSET) <br> * Seite 1, Zeilen 51-94; Figuren 3-5 * | 1,2 | |
| A | | 8,15 | |
| A | DE-B-1 922 499  (FORKARDT) <br> * Spalte 3, Zeile 46 - Spalte 4, Zeile 12; Figuren 1,2,5 * | 1 | |

--- -/-

Der vorliegende Recherchenbericht wurde für alle Patentansprüche erstellt.

| Recherchenort | Abschlußdatum der Recherche | Prüfer |
|---|---|---|
| BERLIN | 17-12-1986 | MARTIN A E W |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 533 770 (RÖHM) <br> * Figuren 1,2 * <br><br> --- | 1 | |
| A | US-A-3 219 356 (WILTERDINK et al.) <br> * Anspruch 1; Figuren 1,2 * <br><br> --- | 1 | |
| D,A | DE-C-2 632 938 (HEGENSCHEIDT) <br> * Anspruch 1; Figur 1 * <br><br> ----- | 1 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| BERLIN | 17-12-1986 | MARTIN A E W |